# EUROPÄISCHE PATENTSCHRIFT

(11) **EP 3 996 221 B1**
(45) Veröffentlichungstag und Bekanntmachung des Hinweises auf die Patenterteilung: **01.01.2025**
(21) Anmeldenummer: 21205855.6
(22) Anmeldetag: 02.11.2021
(51) Int. Cl.: H02B 1/052, H01R 9/26, H02B 1/20, H02B 1/32

(54) **TRAGSCHIENENBEFESTIGUNGSEINRICHTUNG, ANORDNUNG UND SCHALTSCHRANK**
RAIL FASTENING DEVICE, ARRANGEMENT AND SWITCH CABINET
DISPOSITIF DE FIXATION DE RAIL PORTEUR, AGENCEMENT ET ARMOIRE DE COMMANDE

(30) Priorität: 06.11.2020 DE 102020129264
(43) Veröffentlichungstag der Anmeldung: 11.05.2022
(73) Patentinhaber: Phoenix Contact GmbH & Co. KG, 32825 Blomberg (DE)
(72) Erfinder: BUSSE, Reiner, 33719 Bielefeld (DE); STRUCKMANN, Sascha, 32545 Bad Oeynhausen (DE)

(56) Entgegenhaltungen:
- EP-A1- 0 871 248
- DE-A1- 102019 105 077
- DE-A1- 19 610 854
- DE-A1- 2 944 372
- FR-A1- 2 638 033
- US-A- 5 944 566

## Beschreibung

Die Erfindung betrifft eine Tragschienenbefestigungseinrichtung zum Befestigen einer mit Bauelementen bestückten Tragschiene an einer Wand, beispielsweise einer Wand eines Schaltschranks, welche eine Befestigungseinrichtung, die mindestens zwei Befestigungselemente zum Aufnehmen der Tragschiene aufweist, eine mit den zwei Befestigungselementen verbundene Schienenanordnung und mindestens eine an der Schienenanordnung angeordnete Klemme aufweist. Weiter betrifft die Erfindung eine Anordnung und einen Schaltschrank mit einer derartigen Anordnung.

Entsprechende bzw. ähnliche Tragschienenbefestigungseinrichtungen sind beispielsweise aus der FR 2 638 033 A1, der DE 29 44 372 A1 und der DE 10 2019 105 077 A1 bekannt. Tragschienen können als ein längliches U- oder C-Profil ausgebildet sein und dienen dazu, eine Vielzahl von Bauelementen, insbesondere Anschlussklemmen, wie Reihenklemmen, aufzunehmen. Über die Tragschienen können die Bauelemente in einem Schaltschrank montiert werden. Die Tragschienen weisen meist eine Vielzahl von Öffnungen auf, über welche die Tragschienen mittels Schrauben an einer Wand des Schaltschranks befestigt werden können. Da die Schrauben nicht mehr zugänglich sind, wenn die Tragschienen mit Bauelementen bestückt sind, müssen die Tragschienen zunächst im Schaltschrank mittels der Schrauben befestigt werden und erst nach der Befestigung bzw. Montage der Tragschienen an einer Wand des Schaltschranks können die Tragschienen mit den Bauelementen bestückt werden. Eine mit Bauelementen vorkonfektionierte und damit bestückte Tragschiene kann damit nicht in dem Schaltschrank montiert werden. Dadurch ist auch keine automatisierte Bestückung der Tragschienen möglich. Der Montageaufwand zum Bestücken eines Schaltschranks mit Bauelementen und Tragschienen ist dadurch sehr hoch. Für eine Anbindung einer Schirmung bzw. eines Schirmgeflechts eines an eine der Bauelementen angeschlossenen Kabels ist zudem meist ein separater Auflageblock zur Aufnahme einer Klemme notwendig, wobei dieser Auflageblock ebenfalls an der Tragschiene befestigt werden muss, wodurch der Montageaufwand weiter erhöht wird.

Der Erfindung liegt die Aufgabe zu Grunde, eine Tragschienenbefestigungseinrichtung, eine Anordnung sowie einen Schaltschrank zur Verfügung zu stellen, bei welchen der Montageaufwand reduziert werden kann.

Die Aufgabe wird erfindungsgemäß mit den Merkmalen des unabhängigen Anspruchs gelöst. Zweckmäßige Ausgestaltungen und vorteilhafte Weiterbildungen der Erfindung sind in den Unteransprüchen angegeben.

Die Tragschienenbefestigungseinrichtung gemäß der Erfindung zeichnet sich dadurch aus, dass die Schienenanordnung mindestens zwei Halteschienen aufweist, wobei jedem Befestigungselement eine der mindestens zwei Halteschienen zugeordnet ist und wobei die Schienenanordnung eine mit den mindestens zwei Halteschienen verbundene Sammelschiene aufweist, wobei an der Sammelschiene die mindestens eine Klemme befestigt ist.

Erfindungsgemäß ist es nunmehr vorgesehen, dass die Befestigung der Klemme über die Befestigungselemente der Befestigungseinrichtung erfolgt, welche auch zur Befestigung der Tragschiene an der Wand bzw. einer Montageplatte dient bzw. dienen. Ein zusätzliches an der Tragschiene zu befestigendes Bauelement, welches zur Aufnahme der Klemme dient, ist damit nicht mehr erforderlich. Dadurch kann die Anzahl der zu montierenden Bauteile reduziert und damit auch der Montageaufwand reduziert werden. Die Tragschiene wird im bereits mit Bauelementen bestückten Zustand über die Befestigungselemente der Befestigungseinrichtung an der Wand befestigt, so dass eine indirekte Montage der Tragschiene an der Wand erfolgen kann. Diese Befestigungselemente können mit der Schienenanordnung, an welcher die Klemme angeordnet ist, verbunden sein, so dass die Schienenanordnung in einem direkten Kontakt mit den Befestigungselementen der Befestigungseinrichtung stehen kann. Die Befestigungselemente können jeweils eine Aufnahmekontur aufweisen, über welche eine formschlüssige und/oder kraftschlüssige Verbindung der Befestigungselemente mit der Schienenanordnung möglich ist. Die Klemme wird indirekt über die Schienenanordnung an den Befestigungselementen befestigt. Die Klemme kann beispielsweise eine Schirmklemme zum Klemmen einer Schirmung eines an den Bauelementen angeschlossenen Kabels, eine Einspeiseklemme oder eine Anschlussklemme sein. Auch andere Arten von Klemmen sind möglich. Die Bauelemente können beispielsweise Reihenklemmen, Steuerungen, Netzteile oder dergleichen sein, wobei auch unterschiedliche Arten von Bauelementen an der Tragschiene angeordnet, insbesondere aufgerastet sein können.

Die Schienenanordnung weist erfindungsgemäß mindestens zwei Halteschienen auf, wobei jedem Befestigungselement eine der mindestens zwei Halteschienen zugeordnet ist und wobei die Schienenanordnung eine mit den mindestens zwei Halteschienen verbundene Sammelschiene aufweist, wobei an der Sammelschiene die mindestens eine Klemme befestigt ist. Die Schienenanordnung umfasst damit mehrere Halteschienen, wobei sich die Sammelschiene, an welcher die Klemme angeordnet ist, um beispielsweise die Schirmung des Leiters bzw. Kabels an die Sammelschiene zu klemmen und anzuschließen, entlang der mehreren Halteschienen erstrecken kann. Die Anzahl der Halteschienen kann beispielsweise der Anzahl der Befestigungselemente der Befestigungseinrichtung entsprechen, so dass jedem Befestigungselement eine

Halteschiene zugeordnet sein kann. Über die Halteschienen kann die direkte Verbindung und damit Befestigung der Schienenanordnung an den Befestigungselementen erfolgen.

Die mindestens zwei Halteschienen sind vorzugsweise lösbar an den mindestens zwei Befestigungselementen befestigt. Jedes Befestigungselement kann eine Aufnahmekontur aufweisen, über welche jeweils eine der Halteschienen an dem Befestigungselement aufgenommen sein kann. Die Aufnahmekontur kann beispielsweise in Form einer Ausnehmung, insbesondere einer nutförmigen Ausnehmung, ausgebildet sein, in welche eine der Halteschienen eingelegt oder eingeschoben werden kann. Über die Aufnahmekontur kann eine formschlüssige Verbindung zwischen einer der Befestigungselemente und einer der Halteschienen erfolgen. Weiter können die Halteschienen kraftschlüssig mit dem jeweiligen Befestigungselement verbunden sein. Die kraftschlüssige Verbindung kann über ein Befestigungsmittel erfolgen, welches vorzugsweise gleichzeitig auch zur Befestigung der Befestigungselemente der Befestigungseinrichtung an der Wand dienen kann. Das Befestigungsmittel kann damit eine kraftschlüssige Verbindung zwischen jeweils einem Befestigungselement der Befestigungseinrichtung, der Halteschiene und der Wand ausbilden. Das Befestigungsmittel kann beispielsweise eine Schraubverbindung sein. Über das Befestigungsmittel kann damit die Halteschiene auch an der Wand befestigt werden. Das Befestigungsmittel kann durch das jeweilige Befestigungselement der Befestigungseinrichtung und durch die Halteschiene geführt werden, um anschließend an der Wand befestigt zu werden, so dass die Befestigungselemente der Befestigungseinrichtung und die jeweilige Halteschiene der Schienenanordnung gleichzeitig an der Wand befestigt werden können.

Die mindestens zwei Halteschienen können jeweils in Form einer Winkelschiene, insbesondere einer L-förmigen Winkelschiene, ausgebildet sein. Die Ausbildung der Halteschienen jeweils als eine Winkelschiene ermöglicht eine schnelle und einfache Montage der Halteschiene an dem jeweiligen Befestigungselement der Befestigungseinrichtung und auch der Sammelschiene an der Halteschiene. Die Winkelschiene weist vorzugsweise zwei Schienenarme auf, welche bevorzugt in einem rechten Winkel zueinander angeordnet sind. An einem ersten Schienenarm kann die Befestigung der Halteschiene an dem jeweiligen Befestigungselement der Befestigungseinrichtung erfolgen und an dem zweiten Schienenarm kann die Befestigung der Sammelschiene und damit der Klemme an der Halteschiene erfolgen.

Um die Montage der Sammelschiene an den Halteschienen zu erleichtern, kann an jeder Halteschiene ein Verbindungselement angeordnet sein, über welches die Sammelschiene an der jeweiligen Halteschiene befestigt werden kann. Das Verbindungselement ermöglicht eine indirekte Befestigung der Sammelschiene an der Halteschiene, so dass die Halteschiene selber keine speziell ausgestaltete Aufnahme für die Sammelschiene aufweisen muss. Das Verbindungselement kann vorzugsweise lösbar an der jeweiligen Halteschiene befestigt sein. Beispielsweise kann das Verbindungselement mittels einer Schraubverbindung an der Halteschiene befestigt sein. Das Verbindungselement ist bevorzugt beabstandet zu dem jeweiligen Befestigungselement der Befestigungseinrichtung an der Halteschiene befestigt.

Das Verbindungselement kann U-förmig ausgebildet sein und jeweils zwei sich gegenüberliegende Wangen mit jeweils einer Durchführungsöffnung aufweisen, durch welche die Sammelschiene sich im befestigten Zustand hindurcherstrecken kann. Das Verbindungselement kann als Stanz-Biegeblech ausgebildet sein. Die Sammelschiene kann durch die Durchführungsöffnungen der beiden Wangen eines Verbindungselements geschoben werden, um die Sammelschiene an dem Verbindungselement aufzunehmen und zu befestigen. Zur Ausbildung der U-Form kann das Verbindungselement eine Bodenwand aufweisen, über welche die beiden Wangen miteinander verbunden sein können. Über die Bodenwand kann das Verbindungselement an der Halteschiene befestigt werden.

Jedes Befestigungselement der Befestigungseinrichtung kann einen Wandbefestigungsabschnitt zum Befestigen des Befestigungselements an der Wand und einen Tragschienenbefestigungsabschnitt zum Befestigen des Befestigungselements an der Tragschiene aufweisen. In einem befestigten Zustand des Befestigungselements an der Tragschiene kann der Tragschienenbefestigungsabschnitt zumindest bereichsweise durch eine an der Tragschiene ausgebildete Öffnung hindurchgeführt sein. Der Tragschienenabschnitt weist bevorzugt einen Hintergriff auf, in welchen in dem befestigten Zustand ein Abschnitt der Tragschiene eingeschoben sein kann. Zur Befestigung der Tragschiene an einer Wand, insbesondere einer Wand eines Schaltschranks, ist nunmehr eine Befestigungseinrichtung mit mindestens zwei Befestigungselementen vorgesehen, wobei die Befestigungselemente zunächst an einer Wand, welche beispielsweise auch eine Montageplatte sein kann, befestigt werden und anschließend die vorkonfektionierte, mit Bauelementen bestückte Tragschiene an den Befestigungselementen und damit an der Wand befestigt werden kann. Die Tragschiene kann in die an der Wand befestigten Befestigungselemente eingeschoben werden, so dass die Tragschiene durch das Einschieben in die Befestigungselemente der Befestigungseinrichtung an der Wand gehalten und befestigt werden kann. Sonst übliche Befestigungsmittel, wie beispielsweise mehrere Schrauben, müssen an der Tragschiene nicht mehr befestigt werden, um die Tragschiene an der Wand zu befestigen. Dies führt zu einer wesentlichen Vereinfachung der Montage der Tragschiene an einer Wand. Lediglich an einem Endabschnitt der Tragschiene, dort wo keine Bauelemente auf der Tragschiene aufgerastet sind, kann die Tragschiene beispielsweise mittels eines Sicherungselements, wie einer Schraube, an der Wand unmittelbar angeschraubt werden, um ein ungewolltes Herausrutschen der Tragschiene aus dem Hintergriff der Befestigungselemente verhindern zu können. Das Befestigungselement weist zwei Abschnitte auf, den Tragschienenbefestigungsabschnitt und den Wandbefestigungsabschnitt. Der Tragschienenbefestigungsabschnitt ist unmittelbar angrenzend an den Wandbefestigungsabschnitt ausgebildet. Die Bauelemente sind im Bereich eine Oberseite der Tragschiene auf der Tragschiene aufgerastet. Die Montage der Tragschiene an der Wand erfolgt über eine der Oberseite gegenüberliegende Unterseite der Tragschiene, an welcher gerade keine Bauelemente aufgerastet sind. Über die Unterseite wird das Befestigungselement mit seinem Tragschienenbefestigungsabschnitt durch eine Öffnung der Tragschiene geführt, so dass in dem befestigten Zustand das Befestigungselement mit seinem Tragschienenbefestigungsabschnitt zumindest bereichsweise durch die Öffnung der Tragschiene hindurchragt. Entlang der Länge der Tragschiene weist diese vorzugsweise mehrere dieser Öffnungen auf, wobei in jeder Öffnung ein derartiges Befestigungselement angeordnet sein kann, um die Tragschiene an der Wand zu befestigen. Die Öffnungen an der Tragschiene sind vorzugsweise jeweils länglich ausgebildet, so dass sie eine größere Länge als Breite aufweisen. Entlang seiner Länge kann der Tragschienenbefestigungsabschnitt einen Hintergriff aufweisen, in welchen ein an die Öffnung angrenzender Abschnitt der Tragschiene bei der Montage eingeschoben werden kann, so dass die Tragschiene in dem befestigten Zustand in Eingriff mit dem Hintergriff sein kann und die Tragschiene über den Hintergriff an dem jeweiligen Befestigungselement der Befestigungseinrichtung gehalten sein kann. Die Tragschiene kann dadurch über eine rein formschlüssige Verbindung an dem Befestigungselement der Befestigungseinrichtung und damit an der Wand gehalten und befestigt sein. Durch eine derartige Befestigungseinrichtung können bereits mit Bauelementen bestückte Tragschienen, sogenannte vorkonfektionierte Tragschienen, schnell und einfach und damit mit einem geringen Montageaufwand an einer Wand befestigt werden.

Der Hintergriff kann in Form einer an einer Außenumfangsfläche des Tragschienenbefestigungsabschnitts ausgebildeten Aussparung ausgebildet sein. Der Tragschienenbefestigungsabschnitt kann eine zylindrische und damit längliche Form aufweisen, welche beispielsweise einen runden oder ellipsenförmigen Querschnitt aufweisen kann. Die Aussparung kann an der Außenumfangsfläche dieser zylindrischen Form ausgebildet sein. Die Aussparung kann in Form einer Einkerbung an der Außenumfangsfläche des Tragschienenbefestigungsabschnitt ausgebildet sein. Die Aussparung erstreckt sich ausgehend von der Außenumfangsfläche in Richtung einer Mittelachse des Tragschienenbefestigungsabschnitts.

Der Hintergriff und damit die Aussparung kann sich ausgehend von der Außenumfangsfläche des Tragschienenbefestigungsabschnitts in Richtung der Mittelachse des Tragschienenbefestigungsabschnitts verjüngen. Durch die Verjüngung kann eine gezielte Einführung des Abschnitts der Tragschiene in den Hintergriff hinein erfolgen. Zudem kann das Einführen des Abschnitts der Tragschiene in den Hintergriff erleichtert werden.

Der Hintergriff und damit die Aussparung kann durch eine erste Wandfläche und durch eine der ersten Wandfläche gegenüberliegende zweite Wandfläche begrenzt sein, wobei die erste Wandfläche eine Rampenform aufweisen kann. Durch die Rampenform kann die erste Wandfläche eine Schrägfläche ausbilden. Die zweite Wandfläche weist hingegen vorzugsweise keine Rampenform auf. Die zweite Wandfläche erstreckt sich vorzugsweise in einer horizontalen Ebene, welche sich quer zu der Mittelache des Tragschienenbefestigungsabschnitts erstreckt. Die erste Wandfläche kann sich beispielsweise in einem Winkel zwischen 30° und 70°, bevorzugt zwischen 40° und 60°, geneigt zu der zweiten Wandflächen erstrecken. Durch die Rampenform können Toleranzen der Tragschiene ausgeglichen werden. Zudem können dadurch an den Befestigungselementen der Befestigungseinrichtung Tragschienen mit unterschiedlich großen Materialstärken befestigt werden. Weiter kann dadurch eine nahezu spielfreie Verbindung zwischen dem Befestigungselement und der Tragschiene und damit zwischen der Befestigungseinrichtung und der Tragschiene erreicht werden.

Der Tragschienenbefestigungsabschnitt ist vorzugsweise einstückig mit dem Wandbefestigungsabschnitt ausgebildet. Das ganze Befestigungselement ist damit vorzugsweise als ein Stück gefertigt.

Ferner kann die Befestigungseinrichtung zusätzlich zu den Befestigungselementen ein Sicherungselement aufweisen. Das Sicherungselement ist vorzugsweise separat und damit beabstandet zu den Befestigungselementen angeordnet. Mittels des Sicherungselements kann ein ungewolltes Herausrutschen bzw. Lösen der Tragschiene aus den Befestigungselementen der Befestigungseinrichtung verhindert werden. Das Sicherungselement kann unmittelbar an der Wand und unmittelbar an der Tragschiene befestigt werden. Das Sicherungselement wird vorzugsweise an einem Ende der Tragschiene angeordnet, an welchem keine Bauelemente oder dergleichen mehr auf der Tragschiene aufgerastet sind. Das Sicherungselement kann beispielsweise eine Schraube sein. Es ist aber beispielsweise auch möglich, dass das Sicherungselement formgleich zu dem Befestigungselement ausgebildet ist. Das formgleich zu dem Befestigungselement ausgebildete Sicherungselement kann dann beispielsweise um 180° gedreht zu dem eigentlichen Befestigungselement an der Wand und an der Tragschiene befestigt sein, um eine Sperrwirkung gegen eine Schiebe- oder Rutschbewegung der Tragschiene ausbilden zu können.

Jedes Befestigungselement kann zwei parallel zueinander verlaufende Zentrierungsrippen zum Ausrichten der Tragschiene an dem Befestigungselement aufweisen. Die Zentrierungsrippen können an dem Wandbefestigungsabschnitt des Befestigungselements ausgebildet sein. Die Zentrierungsrippen können derart ausgerichtet sein, dass diese sich entlang der Länge der Tragschiene erstrecken können. Die zwei an einem Befestigungselement ausgebildeten Zentrierungsrippen können derart weit voneinander beabstandet sein, dass die Tragschiene zwischen den beiden Zentrierungsrippen aufgenommen sein kann. Durch die zwei Zentrierungsrippen kann der Wandbefestigungsabschnitt eines Befestigungselements im Querschnitt ein U-Profil ausbilden. Der Wandbefestigungsabschnitt kann in Form eines Flansches ausgebildet sein, an welchem die zwei Zentrierungsrippen angeformt sein können.

Ferner erfolgt die Lösung der erfindungsgemäßen Aufgabe mittels einer Anordnung, welche eine Tragschiene und eine wie vorstehend beschriebene, aus- und weitergebildete Tragschienenbefestigungseinrichtung aufweist, wobei die Tragschiene über die Tragschienenbefestigungseinrichtung an einer Wand befestigt ist, um die Tragschiene an einer Wand zu halten. Vorzugsweise können entlang einer Länge der Tragschiene mehrere Befestigungselemente der Befestigungseinrichtung vorgesehen sein, so dass die Tragschiene mit einer hohen Stabilität und einer hohen Sicherheit an der Wand befestigt werden kann. Die entlang einer Länge der Tragschiene angeordneten Befestigungselemente einer Befestigungseinrichtung sind vorzugsweise beabstandet zueinander angeordnet.

Zudem erfolgt die Lösung der erfindungsgemäßen Aufgabe mittels eines Schaltschranks, welcher mindestens eine vorstehend beschriebene, aus- und weitergebildete Anordnung aufweist, die an einer Wand des Schaltschranks befestigt ist.

Nachfolgend wird die Erfindung unter Bezugnahme auf die anliegenden Zeichnungen anhand bevorzugter Ausführungsformen näher erläutert.

Es zeigen
- Fig. 1: eine schematische Darstellung einer Montage einer Tragschienenbefestigungseinrichtung gemäß der Erfindung in einem ersten Montageschritt zur Montage an einer Wand,
- Fig. 2: eine schematische Darstellung der Befestigungselemente der Befestigungseinrichtung zusammen mit den Halteschienen der Schienenanordnung befestigt an der Wand,
- Fig. 3: eine schematische Darstellung einer auf die in Fig. 2 gezeigte Anordnung montierte Tragschiene,
- Fig. 4: eine schematische Darstellung der Montage von Verbindungselementen an den Halteschienen der Schienenanordnung,
- Fig. 5: eine schematische Darstellung der Tragschienenbefestigung mit der Sammelschiene montiert an den Verbindungselementen der Schienenanordnung, und
- Fig. 6: eine schematische Darstellung der Tragschienenbefestigungseinrichtung mit der Klemme montiert an der Sammelschiene.

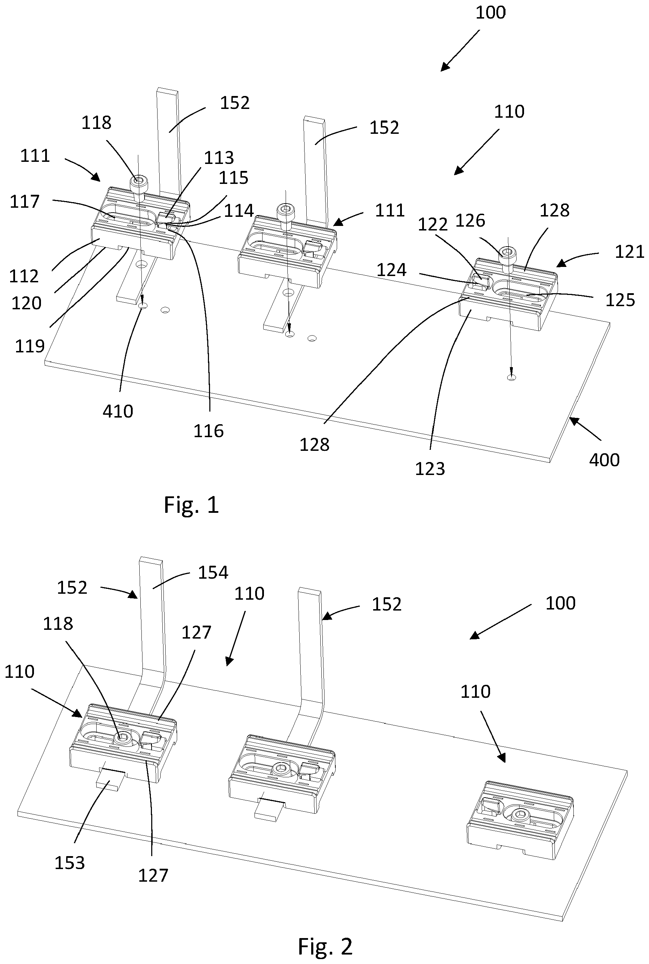

In den Fig. 1 bis 6 ist die Montage einer mit Bauelementen 300 bestückten Tragschiene 200 an einer Wand 400 mittels einer Tragschienenbefestigungseinrichtung 100 gezeigt.

Die Tragschienenbefestigungseinrichtung 100 weist eine Befestigungseinrichtung 110 zum Befestigen der Tragschiene 200 an der Wand 400 und eine Schienenanordnung 150 zur Montage einer oder mehrerer Klemmen 170 auf.

Die Befestigungseinrichtung 110 weist hier zwei Befestigungselemente 111 auf, welche jeweils beabstandet zueinander an der Wand 400 befestigt werden.

Die Befestigungselemente 111 weisen jeweils einen Wandbefestigungsabschnitt 112 auf, über welchen das Befestigungselement 111 an der Wand 400 befestigt werden kann. Weiter weist jedes Befestigungselement 111 einen Tragschienenbefestigungsabschnitt 113 auf, über welchen das Befestigungselement 111 an einer Tragschiene 200 befestigt werden kann. Der Tragschienenbefestigungsabschnitt 113 grenzt unmittelbar an den Wandbefestigungsabschnitt 112 an. Der Tragschienenbefestigungsabschnitt 113 ist einstückig mit dem Wandbefestigungsabschnitt 112 ausgebildet. Der Tragschienenbefestigungsabschnitt 113 steht von dem Wandbefestigungsabschnitt 112 ab bzw. hervor. Der Tragschienenbefestigungsabschnitt 113 weist eine wesentlich kleinere Querschnittsfläche auf als der Wandbefestigungsabschnitt 112.

An dem Tragschienenbefestigungsabschnitt 113 ist ein Hintergriff 114 ausgebildet, in welchen ein Abschnitt 210 der Tragschiene 200 zur Befestigung der Tragschiene 200 an dem Befestigungselement 111 eingeschoben werden kann. Der Hintergriff 114 stellt einen Hinterschnitt dar. Der Hintergriff 114 ist in Form einer an der Außenumfangsfläche des Tragschienenbefestigungsabschnitts 113 ausgebildeten Aussparung ausgebildet. Die Aussparung und damit der Hintergriff 114 erstrecken sich ausgehend von der Außenumfangsfläche des Tragschienenbefestigungsabschnitts 113 in Richtung einer Mittelachse des Tragschienenbefestigungsabschnitts 113. Bei der hier gezeigten Ausgestaltung erstreckt sich der Hintergriff 114 derart weit in den Tragschienenbefestigungsabschnitt 113 hinein, dass der Hintergriff 114 sich bis zu der Mittelachse des Tragschienenbefestigungsabschnitts 113 erstreckt.

Die den Hintergriff 114 ausbildende Aussparung ist derart geformt, dass sich die Aussparung ausgehend von der Außenumfangsfläche des Tragschienenbefestigungsabschnitts 113 in Richtung der Mittelachse des Tragschienenbefestigungsabschnitts 113 verjüngt. Die Verjüngung ist dadurch ausgebildet, dass eine der beiden die Aussparung bzw. den Hintergriff 114 begrenzenden Wandflächen 115, 116 eine Rampenform aufweist. Die erste Wandfläche 115 weist die Rampenform auf, wohingegen die zweite Wandfläche 116 sich in einer horizontalen Ebene erstreckt. Die horizontale Ebene verläuft quer zu der Mittelachse. Durch die Rampenform ist die erste Wandfläche 115 schräg verlaufend ausgebildet, so dass die erste Wandfläche 115 sich vorzugsweise in einem Winkel zwischen 30° und 60° zu der zweiten Wandfläche 116 erstreckt.

An die zweite Wandfläche 116 grenzt der Wandbefestigungsabschnitt 112 an bzw. die Wandfläche 116 kann bereits durch den Wandbefestigungsabschnitt 112 ausgebildet sein.

Die zweite Wandfläche 116 bildet eine ebene Auflagefläche für den Abschnitt 210 der Tragschiene 200 aus.

Der Wandbefestigungsabschnitt 112 weist die Form eines Flansches auf. Der Wandbefestigungsabschnitt 112 bildet durch seine Flanschform eine Auflagefläche für die Tragschiene 200 als auch für die Wand 400 aus.

An dem Wandbefestigungsabschnitt 112 ist eine Öffnung 117 ausgebildet, in welche ein Befestigungsmittel 118, wie eine Schraube einer Schraubverbindung, eingeführt werden kann, um das Befestigungselement 111 an der Wand 400 zu befestigen. Die Wand 400 weist wiederum für jedes Befestigungselement 111 eine Öffnung 410 auf, in welcher das Befestigungsmittel 118 eines Befestigungselements 111 befestigt, insbesondere eingeschraubt werden kann.

Die Befestigungselemente 111 werden ferner mit der Schienenanordnung 150 verbunden. Die Schienenanordnung 150 weist mehrere Halteschienen 152 auf. Jeweils einem Befestigungselement 111 ist bei der hier gezeigten Ausgestaltung eine Halteschiene 152 zugeordnet.

An dem Wandbefestigungsabschnitt 112 eines Befestigungselements 111 ist eine Aufnahmekontur 119 zur Aufnahme der Halteschiene 152 ausgebildet. Die Aufnahmekontur 119 ist an einer in Richtung Wand 400 zeigenden Unterseite 120 des Wandbefestigungsabschnitts 112 ausgebildet. Mit der Unterseite 120 liegt der Wandbefestigungsabschnitt 112 und damit das Befestigungselement 111 in dem an der Wand 400 montierten Zustand flächig an der Wand 400 an. Die Aufnahmekontur 119 ist in Form einer nutförmigen Aussparung ausgebildet. Die Aufnahmekontur 119 erstreckt sich über die gesamte Breite des Wandbefestigungsabschnitts 112 und damit der gesamten Breite des Befestigungselements 111.

Bei der Montage wird die Halteschiene 152 in die Aufnahmekontur 119 des Befestigungselements 111 eingelegt bzw. eingeschoben und anschließend wird durch ein Führen des Befestigungsmittels 118 durch die Öffnung 117 die Halteschiene 152 mit dem Befestigungselement 111 verbunden und in diesem verbundenen Zustand wird das Befestigungselement 111 zusammen mit der Halteschiene 152 an der Wand 400 mittels des Befestigungsmittels 118 befestigt, wie in Fig. 1 gezeigt ist. Das Befestigungsmittel 118 erstreckt sich damit in dem montierten Zustand durch das Befestigungselement 111 und die Halteschiene 152 hindurch.

Über die Aufnahmekontur 119 und das Befestigungsmittel 118 erfolgt eine lösbare Befestigung der Halteschiene 152 an dem Befestigungselement 111.

Die Aufnahmekontur 119 ist derart ausgebildet, dass in dem eingeschobenen bzw. eingelegten Zustand die Halteschiene 152 bündig mit der Unterseite 120 des Wandbefestigungsabschnitts 112 ausgebildet ist, so dass die Halteschiene 152 in dem montierten Zustand ebenso wie die Unterseite 120 des Wandbefestigungsabschnitts 112 des Befestigungselements 111 flächig an der Wand 400 anliegt.

Die Halteschienen 152 sind jeweils in Form einer L-förmigen Winkelschiene ausgebildet. Die Halteschienen 152 weisen durch die Ausbildung als Winkelschiene einen ersten Schienenarm 153 und einen zweiten Schienenarm 154 auf. Der erste Schienenarm 153 erstreckt sich in einem rechten Winkel zu dem zweiten Schienenarm 154. An dem ersten Schienenarm 153 erfolgt die Befestigung der Halteschiene 152 an dem Befestigungselement 111 und an der Wand 400. An dem zweiten Schienenarm 154 erfolgt die Befestigung einer Sammelschiene 155 der Schienenanordnung 150 an der Halteschiene 152.

Fig. 2 zeigt den montierten Zustand der Halteschienen 152 und der Befestigungselemente 111 an der Wand 400.

Sind die Halteschienen 152 der Schienenanordnung 150 und die Befestigungselemente 111 der Befestigungseinrichtung 110 an der Wand 400 befestigt, wird die mit Bauelementen 300 bestückte Tragschiene 200 an den Befestigungselementen 111 der Befestigungseinrichtung 110 befestigt. Zum besseren Verständnis ist in Fig. 2 die Tragschiene 200 ohne die auf ihr aufgerasteten Bauelemente 300 gezeigt.

Die Tragschiene 200 wird damit an den an der Wand 400 bereits befestigten Befestigungselementen 111 der Befestigungseinrichtung 110 befestigt. Die Tragschiene 200 wird dabei derart auf die Befestigungselemente 111 aufgesetzt, dass der Tragschienenbefestigungsabschnitt 113 durch jeweils eine an der Tragschiene 200 ausgebildete Öffnung 211 hindurchgeführt wird. Zu diesem Zeitpunkt ist der Tragschienenbefestigungsabschnitt 113 noch beabstandet zu dem Abschnitt 210 der Tragschiene 200, über welchen die eigentliche Befestigung der Tragschiene 200 an dem Befestigungselement 111 erfolgt.

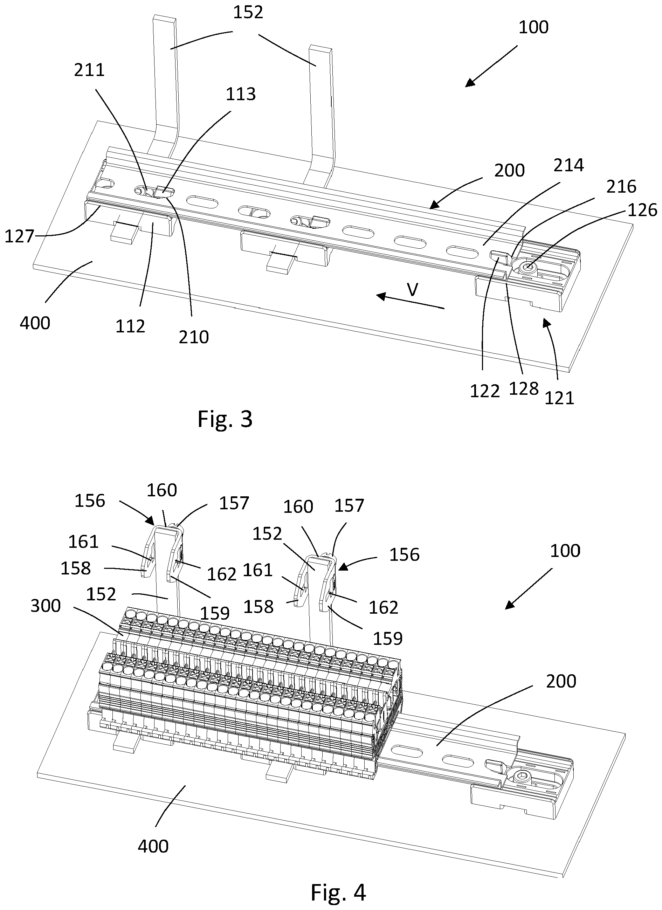

Um den Endzustand der Befestigung zu erreichen, erfolgt eine Verschiebebewegung V der Tragschiene 200 derart, dass der Abschnitt 210 der Tragschiene 200, welcher angrenzend zu der Öffnung 211 ausgebildet ist, in den Hintergriff 114 des Tragschienenbefestigungsabschnitts 113 des Befestigungselements 111 eingeschoben wird. Der eingeschobene Zustand ist in Fig. 3 gezeigt. Bei mehreren Befestigungselementen 111 erfolgt ein zeitgleiches Einschieben der Tragschiene 200 mit dem jeweiligen Abschnitt 210 der Tragschiene 200 in den Hintergriff 114 des jeweiligen Befestigungselements 111.

Die Befestigungseinrichtung 110 weist zusätzlich zu den zwei hier gezeigten Befestigungselementen 111 ein Sicherungselement 121 auf. Das Sicherungselement 121 ist in Form eines zusätzlichen Bauteils zu den Befestigungselementen 111 vorgesehen. Die Tragschiene 200 kann an einem Endabschnitt 214 der Tragschiene 200 mittels des Sicherungselements 121 an der Wand 400 gesichert werden, so dass ein ungewolltes Herausrutschen der Tragschiene 200 aus dem Hintergriff 114 der Befestigungselemente 111 verhindert werden kann. Das Sicherungselement 121 greift durch eine Öffnung 216 an dem Endabschnitt 214 der Tragschiene 200. Diese Öffnung 216 ist hier im Gegensatz zu der Öffnung 211 nicht als Langloch ausgebildet.

Das Sicherungselement 121 weist ebenso wie die Befestigungselemente 111 einen Tragschienenbefestigungsabschnitt 122 und einen Wandbefestigungsabschnitt 123 auf. Der Tragschienenbefestigungsabschnitt 122 weist einen Hintergriff 124 auf, in welchen ein Teil der Tragschiene 200, wie es beispielsweise in Fig. 3 gezeigt ist, eingeschoben werden kann. Der Hintergriff 124 stellt einen Hinterschnitt dar. Der Hintergriff 124 ist in Form einer an der Außenumfangsfläche des Tragschienenbefestigungsabschnitts 122 ausgebildeten Aussparung ausgebildet. Die Aussparung und damit der Hintergriff 124 sind hier formgleich zu der Aussparung und dem Hintergriff 114 des Befestigungselements 111 ausgebildet. Die Aussparung und damit der Hintergriff 124 verjüngt sich in Richtung der Mittelachse des Tragschienenbefestigungsabschnitts 122.

Der Wandbefestigungsabschnitt 123 ist auch hier in Form eines Flansches ausgebildet, in welchem eine Öffnung 125 ausgebildet ist, in welcher ein Befestigungsmittel 126 in Form einer Schraubverbindung angeordnet ist, um das Sicherungselement 121 über seinen Wandbefestigungsabschnitt 123 an einer Wand 400 zu befestigen.

Die Tragschiene 200 wird mit ihrem Endabschnitt 214 in den Hintergriff 124 des Tragschienenbefestigungsabschnitts 122 des Sicherungselements 121 eingeschoben. Dies erfolgt im Bereich der Öffnung 216 an dem Endabschnitt 214 der Tragschiene 200. Die Öffnung 216 ist hier offen ausgebildet, so dass die Öffnung 216 eine U-Form aufweist. Durch die einseitig offene Ausbildung der Öffnung 216 kann der Tragschienenbefestigungsabschnitt 122 des Sicherungselements 121 in die Öffnung 216 derart weit eingeschoben werden, bis die Tragschiene 200 in den Hintergriff 124 eingetaucht und damit an dem Hintergriff 124 verrastet ist.

Das Sicherungselement 121 ist damit formgleich zu dem Befestigungselement 111 ausgebildet. Der Tragschienenbefestigungsabschnitt 113 des Befestigungselements 111 ist formgleich zu dem Tragschienenbefestigungsabschnitt 122 des Sicherungselements 121 ausgebildet. Auch der Wandbefestigungsabschnitt 112 des Befestigungselements 111 ist formgleich zu dem Wandbefestigungsabschnitt 123 des Sicherungselements 121 ausgebildet.

Um die Sperrwirkung des Sicherungselements 121 zu erreichen, ist das Sicherungselement 121 um 180° gedreht zu dem formgleich ausgebildeten Befestigungselement 111 angeordnet.

Der als Flansch ausgebildete Wandbefestigungsabschnitt 112 des Befestigungselements 111 und auch der Wandbefestigungsabschnitt 123 des Sicherungselements 121 sind im Querschnitt U-förmig ausgebildet, so dass die Tragschiene 200 in den U-förmigen Querschnitt der Wandbefestigungsabschnitte 112, 123 eingeschoben werden kann, wie in Fig. 3 zu erkennen ist. Zur Ausbildung der U-Form weisen die Wandbefestigungsabschnitte 112, 123 auf ihrer in Richtung Tragschiene 200 gerichteten Seitenfläche jeweils zwei parallel zueinander angeordnete Zentrierungsrippen 127, 128 auf, zwischen denen die Tragschiene 200 eingeschoben werden kann, so dass ein seitliches Verrutschen bzw. Verkippen der Tragschiene 200 auf dem flanschförmigen Wandbefestigungsabschnitt 112, 123 verhindert werden kann.

Nach dem Befestigen der mit Bauelementen 300 bestückten Tragschiene 200 an der Befestigungseinrichtung 110 durch Aufsetzen der Tragschiene 200 auf die Befestigungseinrichtung 110 und Verschieben der Tragschiene 200 in die mit dem Pfeil V gekennzeichnete Richtung, kann beispielsweise die Schirmung bzw. das Schirmgeflecht der in den Bauelementen 300 eingesteckten Kabel, hier nicht gezeigt, an der Klemme 170, welche hier dann eine Schirmklemme ist, befestigt bzw. verklemmt werden, wodurch die Schirmung gegen die Sammelschiene 155 geklemmt werden kann.

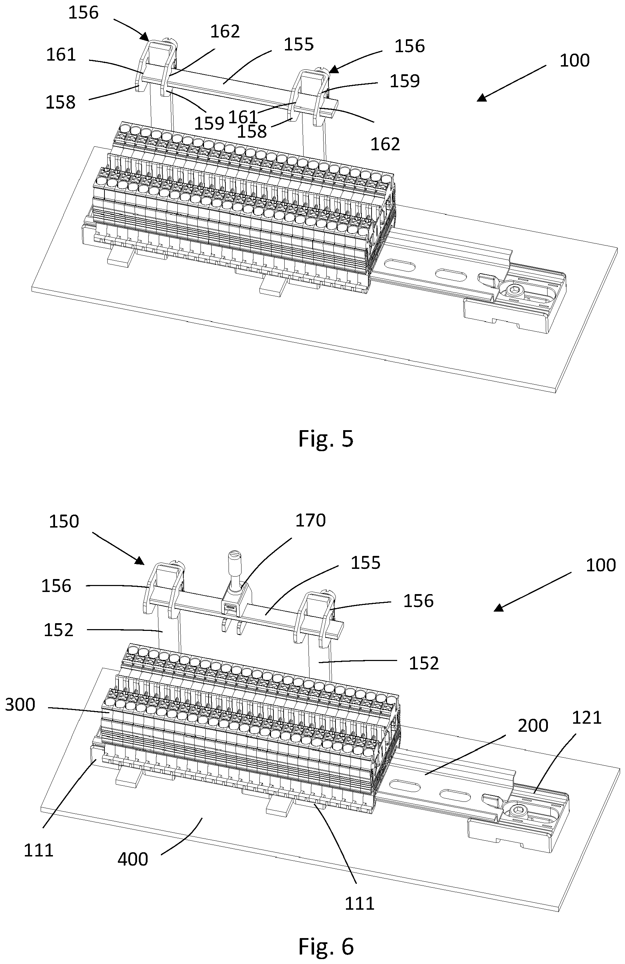

Die Sammelschiene 155 erstreckt sich, wie in den Fig. 5 und 6 gezeigt ist, parallel zu der Länge der Tragschiene 200. Die Sammelschiene 155 ist über Verbindungselemente 156 an den Halteschienen 152 befestigt. An jeder Halteschiene 152 ist ein Verbindungselement 156 angeordnet. Die Verbindungselemente 156 sind jeweils an dem zweiten Schienenarm 154 der Halteschienen 152 befestigt. Die Befestigung erfolgt hier über eine Schraubverbindung 157, so dass die Verbindungselemente 156 lösbar an den Halteschienen 152 angeschraubt sind.

Die Verbindungselemente 156 weisen jeweils eine U-Form auf, indem diese jeweils zwei sich parallel zueinander erstreckende Wangen 158, 159 und eine zwischen den beiden Wangen 158, 159 ausgebildete Bodenwand 160 aufweisen. Die Bodenwand 160 ist in einem rechten Winkel zu dem beiden Wangen 158, 159 angeordnet. Über die Bodenwand 160 erfolgt die Befestigung der Verbindungselemente 156 an den Halteschienen 152, indem sich die Schraubverbindung 157 durch die Bodenwand 160 hindurcherstreckt. Die Verbindungselemente 156 liegen in dem befestigten Zustand mit ihrer Bodenwand 160 jeweils flächig an der Halteschiene 152 bzw. an dem zweiten Schienenarm 154 der Halteschiene 152 an.

Die Wangen 158, 159 weisen jeweils eine Durchführungsöffnung 161, 162 auf, durch welche die Sammelschiene 155 hindurchgeführt wird, um die Sammelschiene 155 an den Verbindungselementen 156 zu halten. Die Durchführungsöffnungen 161, 162 der Wangen 158, 159 bzw. der Verbindungselemente 156 sind fluchtend zueinander angeordnet bzw. ausgerichtet.

Über die Durchführungsöffnungen 161, 162 ist die Sammelschiene 155 in die Wangen 158, 159 und damit in die Verbindungselemente 156 eingeschoben.

Die Klemme 170 ist auf die Sammelschiene 155 aufgesteckt bzw. auf der Sammelschiene 155 klemmend befestigt. Die hier gezeigte Klemme 170, welche als Schirmklemme ausgebildet ist, weist einen Schraubanschluss auf, um die Schirmung bzw. das Schirmgeflecht eines an den Bauelementen 300 angeschlossenen Kabels gegen die Sammelschiene 155 elektrisch kontaktierend aufzulegen bzw. zu klemmen.

### Bezugszeichenliste

- 100: Tragschienenbefestigungseinrichtung
- 110: Befestigungseinrichtung
- 111: Befestigungselement
- 112: Wandbefestigungsabschnitt
- 113: Tragschienenbefestigungsabschnitt
- 114: Hintergriff
- 115: Erste Wandfläche
- 116: Zweite Wandfläche
- 117: Öffnung
- 118: Befestigungsmittel
- 119: Aufnahmekontur
- 120: Unterseite
- 121: Sicherungselement
- 122: Tragschienenbefestigungsabschnitt
- 123: Wandschienenbefestigungsabschnitt
- 124: Hintergriff
- 125: Öffnung
- 126: Befestigungsmittel
- 127: Zentrierungsrippe
- 128: Zentrierungsrippe
- 150: Schienenanordnung
- 152: Halteschiene
- 153: Erster Schienenarm
- 154: Zweiter Schienenarm
- 155: Sammelschiene
- 156: Verbindungselement
- 157: Schraubverbindung
- 158: Wange
- 159: Wange
- 160: Bodenwand
- 161: Durchführungsöffnung
- 162: Durchführungsöffnung
- 170: Klemme
- 200: Tragschiene
- 210: Abschnitt
- 211: Öffnung
- 214: Endabschnitt
- 216: Öffnung

- 300: Bauelement

- 400: Wand
- 410: Erste Öffnung

- V: Verschiebebewegung

## Patentansprüche

1. Tragschienenbefestigungseinrichtung (100) zum Befestigen einer mit Bauelementen (300) bestückten Tragschiene (200) an einer Wand (400), mit
einer Befestigungseinrichtung (110), welche mindestens zwei Befestigungselemente (111) zum Aufnehmen der Tragschiene (200) aufweist,
einer mit den zwei Befestigungselementen (111) verbundenen Schienenanordnung (150), und
mindestens einer an der Schienenanordnung (150) angeordneten Klemme (170), **dadurch gekennzeichnet, dass** die Schienenanordnung (150) mindestens zwei Halteschienen (152) aufweist, wobei jedem Befestigungselement (111) eine der mindestens zwei Halteschienen (152) zugeordnet ist und wobei die Schienenanordnung (150) eine mit den mindestens zwei Halteschienen (152) verbundene Sammelschiene (155) aufweist, wobei an der Sammelschiene (155) die mindestens eine Klemme (170) befestigt ist.

2. Tragschienenbefestigungseinrichtung (100) nach Anspruch 1, **dadurch gekennzeichnet, dass** die mindestens zwei Halteschienen (152) lösbar an den mindestens zwei Befestigungselementen (111) befestigt sind.

3. Tragschienenbefestigungseinrichtung (100) nach Anspruch 1 oder 2, **dadurch gekennzeichnet, dass** die mindestens zwei Halteschienen (152) jeweils in Form einer Winkelschiene, insbesondere einer L-förmigen Winkelschiene, ausgebildet sind.

4. Tragschienenbefestigungseinrichtung (100) nach einem der Ansprüche 1 bis 3, **dadurch gekennzeichnet, dass** an den mindestens zwei Halteschienen (152) jeweils ein Verbindungselement (156) angeordnet ist, über welches die Sammelschiene (155) an den mindestens zwei Halteschienen (152) befestigt ist.

5. Tragschienenbefestigungseinrichtung (100) nach Anspruch 4, **dadurch gekennzeichnet, dass** die Verbindungselemente (156) U-förmig ausgebildet sind und jeweils zwei sich gegenüberliegende Wangen (158, 159) mit jeweils einer Durchführungsöffnung (161, 162) aufweisen, durch welche die Sammelschiene (155) sich im befestigten Zustand hindurcherstreckt.

6. Tragschienenbefestigungseinrichtung (100) nach einem der Ansprüche 1 bis 5, **dadurch gekennzeichnet, dass** jedes Befestigungselement (111) einen Wandbefestigungsabschnitt (112) zum Befestigen des Befestigungselements (111) an der Wand (400) und einen Tragschienenbefestigungsabschnitt (113) zum Befestigen des Befestigungselements (111) an der Tragschiene (200) aufweist, wobei der Tragschienenbefestigungsabschnitt (113) in einem befestigten Zustand zumindest bereichsweise durch eine an der Tragschiene (200) ausgebildete Öffnung (211) hindurchgeführt ist und wobei der Tragschienenbefestigungsabschnitt (113) einen Hintergriff (114) aufweist, in welchen in dem befestigten Zustand ein Abschnitt (210) der Tragschiene (200) eingeschoben ist.

7. Tragschienenbefestigungseinrichtung (100) nach Anspruch 6, **dadurch gekennzeichnet, dass** der Hintergriff (114) in Form einer an einer Außenumfangsfläche des Tragschienenbefestigungsabschnitts (113) ausgebildeten Aussparung ausgebildet ist.

8. Tragschienenbefestigungseinrichtung (100) nach Anspruch 7, **dadurch gekennzeichnet, dass** der Hintergriff (114) sich ausgehend von der Außenumfangsfläche des Tragschienenbefestigungsabschnitts (113) in Richtung einer Mittelachse des Tragschienenbefestigungsabschnitts (113) verjüngt.

9. Tragschienenbefestigungseinrichtung (100) nach Anspruch 7 oder 8, **dadurch gekennzeichnet, dass** der Hintergriff (114) durch eine erste Wandfläche (115) und durch eine der ersten Wandfläche (115) gegenüberliegende zweite Wandfläche (116) begrenzt ist, wobei die erste Wandfläche (115) eine Rampenform aufweist.

10. Tragschienenbefestigungseinrichtung (100) nach einem der Ansprüche 1 bis 9, **dadurch gekennzeichnet, dass** die Befestigungseinrichtung (110) ein separat zu dem Befestigungselement (111) angeordnetes Sicherungselement (121) aufweist.

11. Anordnung, mit einer Tragschiene (200) und mit einer nach einem der Ansprüche 1 bis 10 ausgebildeten Tragschienenbefestigungseinrichtung (100), wobei die Tragschiene (200) über die Tragschienenbefestigungseinrichtung (100) an einer Wand (400) befestigt ist.

12. Schaltschrank, mit mindestens einer Anordnung nach Anspruch 11, welche an einer Wand (400) des Schaltschranks befestigt ist.

## Claims

1. Support rail fastening device (100) for fastening a support rail (200) which is populated with construction elements (300) to a wall (400), having a fastening device (110) which has at least two fastening elements (111) for receiving the support rail (200);
a rail assembly (150) which is connected to the two fastening elements (111); and
at least one clamp (170) which is disposed on the rail assembly (150),
**characterized in that** the rail assembly (150) has at least two holding rails (152), wherein each fastening element (111) is assigned one of the at least two holding rails (152), and wherein the rail assembly (150) has a busbar (155) which is connected to the at least two holding rails (152), wherein the at least one clamp (170) is fastened to the busbar (155) .

2. Support rail fastening device (100) according to Claim 1, **characterized in that** the at least two holding rails (152) are releasably fastened to the at least two fastening elements (111).

3. Support rail fastening device (100) according to Claim 1 or 2, **characterized in that** the at least two holding rails (152) are in each case designed in the form of an angular rail, in particular of an L-shaped angular rail.

4. Support rail fastening device (100) according to one of Claims 1 to 3, **characterized in that** one connecting element (156), by way of which the busbar (155) is fastened to the at least two holding rails (152), is in each case disposed on the at least two holding rails (152).

5. Support rail fastening device (100) according to Claim 4, **characterized in that** the connecting elements (156) are designed to be U-shaped and have in each case two mutually opposite side walls (158, 159) which have in each case one feedthrough opening (161, 162) through which the busbar (155) extends in the fastened state.

6. Support rail fastening device (100) according to one of Claims 1 to 5, **characterized in that** each fastening element (111) has a wall fastening portion (112) for fastening the fastening element (111) to the wall (400) and a support rail fastening portion (113) for fastening the fastening element (111) to the support rail (200), wherein the support rail fastening portion (113) in a fastened state is at least in portions guided through an opening (211) formed on the support rail (200), and wherein the support rail fastening portion (113) has a rear engagement feature (114) into which a portion (210) of the support rail (200) is inserted in the fastened state.

7. Support rail fastening device (100) according to Claim 6, **characterized in that** the rear engagement feature (114) is designed in the form of a clearance formed on an external circumferential face of the support rail fastening portion (113).

8. Support rail fastening device (100) according to Claim 7, **characterized in that** the rear engagement feature (114), proceeding from the external circumferential face of the support rail fastening portion (113), tapers in the direction of a central axis of the support rail fastening portion (113).

9. Support rail fastening device (100) according to Claim 7 or 8, **characterized in that** the rear engagement feature (114) is delimited by a first wall face (115) and by a second wall face (116), lying opposite the first wall face (115), wherein the first wall face (115) has a ramp shape.

10. Support rail fastening device (100) according to one of Claims 1 to 9, **characterized in that** the fastening device (110) has a securing element (121) which is disposed separately from the fastening element (111).

11. Assembly having a support rail (200) and having a support rail fastening device (100) designed according to one of Claims 1 to 10, wherein the support rail (200) is fastened to a wall (400) by way of the support rail fastening device (100).

12. Control cabinet having at least one assembly according to Claim 11, which is fastened to a wall (400) of the control cabinet.

## Revendications

1. Dispositif (100) de fixation de rail de support, pour fixer un rail de support (200) équipé de composants (300) sur une paroi (400), avec
un dispositif de fixation (110) qui présente au moins deux éléments de fixation (111) pour recevoir le rail de support (200),
un agencement (150) de profilés relié aux deux éléments de fixation (111), et
au moins une pince (170) disposée sur l'agencement (150) de profilés,
**caractérisé en ce que** l'agencement (150) de profilés présente au moins deux profilés de maintien (152), un desdits au moins deux profilés de maintien (152) étant associé à un élément de fixation (111) respectif et l'agencement (150) de profilés présentant une barre de jonction (155) reliée auxdits au moins deux profilés de maintien (152), ladite au moins une pince (170) étant fixée à la barre de jonction (155).

2. Dispositif (100) de fixation de rail de support selon la revendication 1, **caractérisé en ce que** lesdits au moins deux profilés de maintien (152) sont fixés de manière amovible sur lesdits au moins deux éléments de fixation (111).

3. Dispositif (100) de fixation de rail de support selon la revendication 1 ou la revendication 2, **caractérisé en ce que** lesdits au moins deux profilés de maintien (152) présentent chacun la forme d'une cornière, notamment d'une cornière en forme de L.

4. Dispositif (100) de fixation de rail de support selon l'une des revendications 1 à 3, **caractérisé en ce que**, sur chacun desdits au moins deux profilés de maintien (152) est agencé un élément de liaison (156) par lequel la barre de jonction (155) est fixée sur lesdits au moins deux profilés de maintien (152).

5. Dispositif (100) de fixation de rail de support selon la revendication 4, **caractérisé en ce que** les éléments de liaison (156) sont en forme de U et présentent respectivement deux joues (158, 159) opposées l'une à l'autre, présentant chacune une ouverture de passage (161, 162), à travers laquelle la barre de jonction (155) s'étend à l'état fixé.

6. Dispositif (100) de fixation de rail de support selon l'une des revendications 1 à 5, **caractérisé en ce que** chaque élément de fixation (111) présente une portion (112) de fixation à une paroi pour fixer l'élément de fixation (111) à la paroi (400) et une portion (113) de fixation de rail de support pour fixer l'élément de fixation (111) au rail de support (200), la portion (113) de fixation de rail de support étant, dans un état fixé, guidée au moins par zones à travers une ouverture (211) réalisée sur le rail de support (200), et la portion (113) de fixation de rail de support présentant une partie de prise arrière (114) dans laquelle est, dans l'état fixé, insérée une portion (210) du rail de support (200) .

7. Dispositif (100) de fixation de rail de support selon la revendication 6, **caractérisé en ce que** la partie de prise arrière (114) est réalisée sous la forme d'un évidement formé sur une surface périphérique extérieure de la portion (113) de fixation de rail de support.

8. Dispositif (100) de fixation de rail de support selon la revendication 7, **caractérisé en ce que** la partie de prise arrière (114) se rétrécit à partir de la surface périphérique extérieure de la portion (113) de fixation de rail de support en direction d'un axe central de la portion (113) de fixation de rail de support.

9. Dispositif (100) de fixation de rail de support selon la revendication 7 ou la revendication 8, **caractérisé en ce que** la partie de prise arrière (114) est délimitée par une première surface de paroi (115) et par une deuxième surface de paroi (116) opposée à la première surface de paroi (115), la première surface de paroi (115) présentant une forme de rampe.

10. Dispositif (100) de fixation de rail de support selon l'une des revendications 1 à 9, **caractérisé en ce que** le dispositif de fixation (110) présente un élément de sécurité (121) agencé séparément de l'élément de fixation (111).

11. Agencement, avec un rail de support (200) et avec un dispositif (100) de fixation de rail de support réalisé selon l'une des revendications 1 à 10, le rail de support (200) étant fixé à une paroi (400) par l'intermédiaire du dispositif (100) de fixation de rail de support.

12. Armoire de commande, comprenant au moins un agencement selon la revendication 11, qui est fixé à une paroi (400) de l'armoire de commande.
